# EUROPÄISCHE PATENTSCHRIFT

(11) **EP 1 421 012 B1**
(45) Veröffentlichungstag und Bekanntmachung des Hinweises auf die Patenterteilung: **26.07.2006**
(21) Anmeldenummer: 02774292.3
(22) Anmeldetag: 14.08.2002
(51) Int. Cl.: B65D 77/22, F16K 17/00

(54) **ÜBERDRUCKVENTIL FÜR EINEN VERPACKUNGSBEHÄLTER UND VORRICHTUNG ZUM ANBRINGEN DES ÜBERDRUCKVENTILS AN EINER MATERIALBAHN**
PRESSURE RELIEF VALVE FOR A PACKAGING CONTAINER AND DEVICE FOR APPLYING THE PRESSURE RELIEF VALVE TO A WEB OF MATERIAL
SOUPAPE DE SURETE CON UE POUR UN CONTENANT D'EMBALLAGE ET DISPOSITIF DE FIXATION D'UNE SOUPAPE DE SURETE A UNE BANDE DE MATIERE

(30) Priorität: 21.08.2001 DE 10140854
(43) Veröffentlichungstag der Anmeldung: 26.05.2004
(73) Patentinhaber: ROBERT BOSCH GMBH, 70442 Stuttgart (DE)
(72) Erfinder: STOTKIEWITZ, Herbert, 74321 Bietigheim-Bissingen (DE); HAAK, Juergen, 70569 Stuttgart (DE); FISCHER, Thomas, 73630 Remshalden-Geradstetten (DE)
(86) Internationale Anmeldenummer: PCT/DE2002/002976
(87) Internationale Veröffentlichungsnummer: WO 2003/018428

(56) Entgegenhaltungen:
- US-A- 4 444 219
- US-A- 4 690 667
- US-A- 5 354 133
- US-A- 5 427 839
- US-A- 5 584 409

## Beschreibung

Die Erfindung betrifft ein Überdruckventil für einen Verpackungsbehälter nach dem Oberbegriff des Anspruchs 1, wie es aus der US 4,690,667 bekannt ist. Bei dem bekannten Überdruckventil wird die Ventilmembran am Grund des Trägerkörpers mittels eines Klemmteils fixiert, so dass die Ventilmembran unverlierbar im Überdruckventil angeordnet ist. Das bekannte Überdruckventil benötigt daher als zusätzliches Element zur Verliersicherung das Klemmteil, so dass es relativ aufwendig aufgebaut ist. Weiterhin ist in der US 4,690,667 erwähnt, dass anstelle eines Klemmteils die Ventilmembran auch durch eine Klebeverbindung mit dem Trägerkörper verbunden werden kann. Das Herstellen von Klebeverbindungen mit den entsprechenden dazu erforderlichen Vorrichtungen ist jedoch ebenfalls relativ aufwendig. Aufgabe der Erfindung ist daher, ein Überdruckventil für einen Verpackungsbehälter derart auszubilden, dass eine Verliersicherung für die Ventilmembran mit möglichst geringem Aufwand ermöglicht wird. Dies wird erfindungsgemäß im Wesentlichen mittels mit dem Randbereich einstückig verbundener Niederhalterelemente bewirkt, welche im Zusammenhang mit der flexiblen Ventilmembran es ermöglichen, die Ventilmembran unterhalb der Niederhalterelemente anzuordnen und diese so gegen ein Herausfallen aus dem Trägerkörper zu sichern.

Vorteilhafte Weiterbildungen des erfindungsgemäßen Überdurckventils sind in den Unteransprüchen angegeben. Weiterhin ist eine Vorrichtung zum Anbringen von Überdurckventilen an einer Packstoffwand bei gleichzeitiger Bildung von Durchlassöffnungen in der Packstoffwand geschützt.

Ausführungsbeispiele der Erfindung sind in der Zeichnung dargestellt und werden nachfolgend näher erläutert. Es zeigen:
Figur 1 ein nicht erfindungsgemäßes Überdruckventil und eine Vorrichtung zum Anbringen des Überdruckventils an einer Materialbahn in einem Längsschnitt,
Figur 2 eine Draufsicht auf das Überdruckventil nach Figur 1,
Figur 3 ein erfindungsgemäßes Überdruckventil in einer Vorrichtung zum Anbringen des Überdruckventils an einer Materialbahn in einem Längsschnitt,
Figut 4 eine Draufsicht auf das Überdruckventil nach Figur 3 und die
Figuren 5 bis 7 jeweils eine Anordnung zum Anbringen des erfindugnsgemäßen Überdruckventils an einer Materialbahn in einer vereinfachten Seitenansicht während verschiedenen Betriebsphasen.

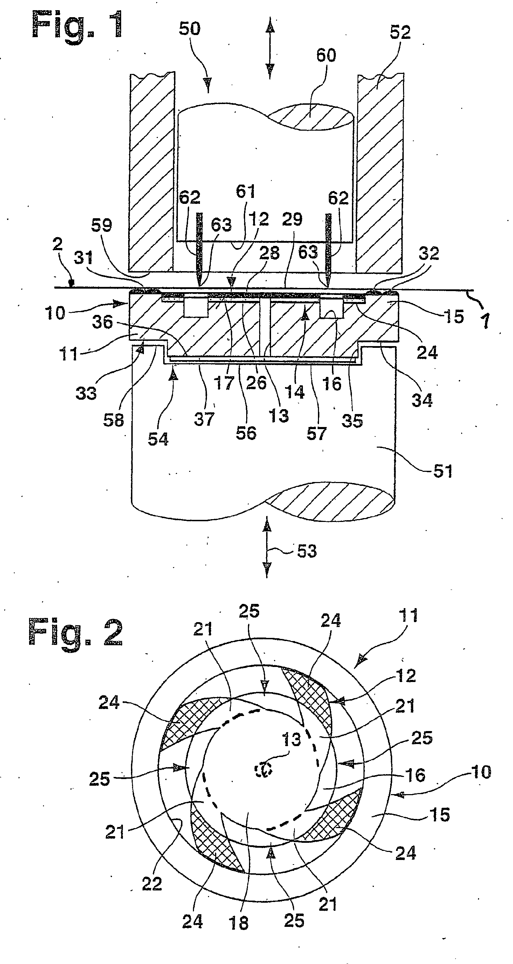

In den Figuren 1 und 2 ist ein erstes nicht erfindungsgemäßes Überdruckventil 10 dargestellt. Dieses Überdruckventil 10 ist auf einer Seite 1 einer Materialbahn 2 vorzugsweise durch ein Ultraschallschweißverfahren befestigbar. Aus einem Abschnitt der Materialbahn 2 wird anschließend ein nicht dargestellter Verpakkungsbehälter hergestellt, wobei die Seite 1 der Materialbahn 2 die spätere Innenseite des Verpackungsbehälters ausbildet. Der Verpackungsbehälter ist mit einem Gas abgebenden Lebensmittel, insbesondere Kaffee oder ähnlichem befüllbar, und wird im Endzustand luftdicht verschlossen.

Das Überdruckventil 10 besteht lediglich aus zwei Bauteilen, einem starren Trägerkörper 11 und einer biegbaren Membran 12. Der Trägerkörper 11 besteht aus Kunststoff und ist als rotationssymmetrisches flaches Teil mit einer im Ausführungsbeispiel zentral angeordneten Durchlassöffnung 13 für das Gas ausgebildet. Die Durchlassöffnung 13 kann jedoch auch außermittig angeordnet sein. Ebenso können mehrere Durchlaßöffnungen 13 vorgesehen sein.

Auf der der Materialbahn 2 zugewandten Seite ist im Trägerkörper 11 eine flache Vertiefung 14 ausgebildet, die von einem randseitig umlaufenden Randbereich 15 begrenzt ist.

Konzentrisch zur Durchlassöffnung 13 ist beabstandet zum Randbereich 15 eine kreisförmig umlaufende Ringnut 16 am Grund 17 der Vertiefung 14 ausgebildet.

Die Membran 12 besteht ebenfalls aus Kunststoff und ist innerhalb der Vertiefung 14 in Höhe deren Grundes 17 angeordnet. Die Membran 12 hat einen runden Zentralbereich 18, der die Durchlassöffnung 13 abdeckt und bis an die Ringnut 16 heranreicht (Figur 2). Vom Zentralbereich 18 gehen vier, in gleichmäßigen Winkelabständen angeordnete Membranarme 21 aus, die radial nach außen bis zur Wand 22 der Vertiefung 14 ragen und in Draufsicht gebogen ausgebildet sind. In den Bereichen zwischen der Ringnut 16 und der Wand 22 sind die Membranarme 21 durch Kleber 24 am Grund 17 der Vertiefung 14 befestigt.

Zwischen den Membranarmen 21 sind membranfreie, als Durchlässe für das Gas wirkende Zwischenzonen 25 ausgebildet. Durch die Anzahl und geometrische Ausbildung der Mebranarme 21 läßt sich die Steifigkeit der Mebran 12, und somit der Öffnungsdruck des Überdruckventils 10 beeinflussen. Die Zwischenzonen 25 beziehungsweise die Membranarme 21 sind durch einen Stanzvorgang aus der Membran 12 herstellbar.

Zwischen dem Grund 17 der Vertiefung 14 und dem Zentralbereich 18 der Membran 12 ist ein Dichtfluid 26, vorzugsweise eine bestimmte Menge von Silikonöl, angeordnet. Wesentlich ist noch, dass die Tiefe der Vertiefung 14 sowie die Dicke der Membran 12 derart gewählt sind, dass zwischen der Oberseite 28 der Membran 12 und der Seite 1 der Materialbahn 2 ein gewisser Abstand bezwiehungsweise ein Spalt 29 verbleibt, so dass von der Materialbahn 2 möglichst kein Druck auf die Membran 12, zumindest im Zentralbereich 18, ausgeübt werden kann.

Auf der Oberseite 31 des Trägerkörpers 11 sind im Bereich des Randbereichs 15 mehrere umlaufende Erhebungen 32 ausgebildet. Diese Erhebungen 32 ermöglichen im Falle einer Ultraschallverschweißung des Überdruckventils 10 mit der Materialbahn 2 eine besonders innige Verbindung. Die Unterseite 33 des Überdruckventils 10 besitzt fluchtend zum Randbereich 15 sowie den Erhebungen 32 einen umlaufenden Auflagebereich 34. Der Auflagebereich 34 geht über eine Stufe 35 in eine zentrale, tiefer angeordnete Basiszone 36 über. Im Bereich der Basiszone 36 kann ein gasdurchlässiges, jedoch feststoffundurchlässiges Filterelement in Form eines Filterpapiers 37, das insbesondere die Durchlassöffnung. 13 überdeckt, angeordnet sein. Die Verbindung des Filterpapiers 37 mit der Basiszone 36 erfolgt vorzugsweise durch Kleben.

Zum Anbringen des Überdruckventils 10 an der Materialbahn 2 dient eine in der Figur 1 dargestellte Vorrichtung 50. Die Vorrichtung 50 hat einen Hubstempel 51 und einen mit dem Hubstempel 51 zusammenwirkenden Siegelstempel 52. Der in Richtung des Pfeiles 53 auf- und abbewegliche Hubstempel 51 hat in Deckung mit der Basiszone 36 eine Aufnahme 54 für das Überdruckventil 10. Wesentlich ist auch, dass die Tiefe der Aufnahme 54 derart groß ist, dass zwischen der Unterseite 33 des Überdruckventils 10, sowie gegebenenfalls des Filterpapiers 37, und dem Grund 56 der Aufnahme 54 ein Spalt 57 verbleibt. Das Überdruckventil 10 liegt somit lediglich auf dem kreisringförmigen, angehobenen Randbereich 58 des Hubstempels 51 mit seinem Auflagebereich 34 auf. In radialer Richtung erfolgt ein Formschluss zwischen der Aufnahme 54 und den Überdruckventil 10.

Der ebenfalls auf- und abbewegliches Siegelstempel 52 ist rohrförmig ausgebildet, wobei die der Materialbahn 2 zugewandte Unterseite 59 des Siegelstempels 52 zumindest die Erhebungen 32, vorzugsweise jedoch den gesamten Randbereich 15 des Überdruckventils 10 überdeckt. Innerhalb des Siegelstempels 52 ist ein getrennt vom Siegelstempel 52 auf- und abbeweglicher Nadelhalter 60 mit im Ausführungsbeispiel vier aus dessen Unterseite 61 herausragenden Nadeln 62 angeordnet. Die Nadeln 62 dienen zum Bilden von Löchern 63 in der Materialbahn 2. Die Anordnung der Nadeln 62 im Nadelhalter 60 ist im Ausführungsbeispiel derart, dass die Nadeln 62 mit den Zwischenzonen 25 der Membran 12 und der Ringnut 16 im Trägerkörper 11 fluchten.

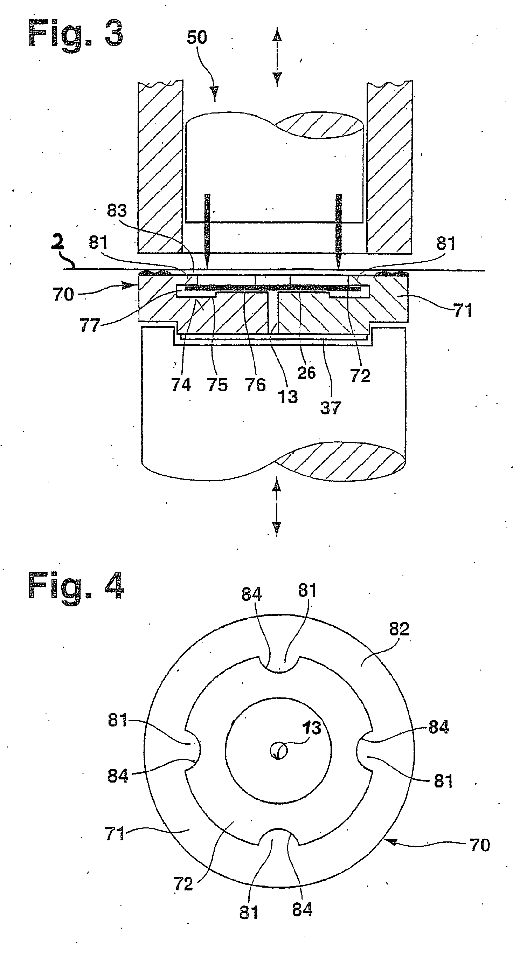

In den Figuren 3 und 4 ist ein erfindungsgemäßes Überdruckventil 70 dargestellt, dass ebenfalls aus lediglich zwei Bauteilen, dem Trägerkörper 71 und der Membran 72 besteht. Im folgenden werden lediglich die wesentlichen Unterschiede zum ersten Überdruckventil 10 beschrieben, während die gemeinsamen Merkmale mit denselben Bezugsziffern bezeichnet sind.

Das ebenfalls rotationssymmetrisch ausgebildete Überdruckventil 70 hat eine Vertiefung 74, von dessen Grund 75 sich ein zentral angeordneter, erhöhter Bereich 76 abhebt. Auf diesem Bereich 76, auf dem auch das Dichtfluid 26 angeordnet ist, liegt die Membran 72 lose auf.

Die Membran 72 hat eine runde Form, wobei der Durchmesser der Membran 72 geringer ist als die Innenweite der Vertiefung 74, so dass zwischen der Membran 72 und dem Rand der Vertiefung 74 ein Spalt 77 ausgebildet ist. Um die Membran 72 im Trägerkörper 71 axial unverlierbar zu fixieren dienen im Ausführungsbeispiel vier, um jeweils 90° zueinander versetzt angeordnete Haltenasen 81. Die Haltenasen 81 sind einstückig mit dem Randbereich 82 des Überdruckventils 70 verbunden, und erstrecken sich radial nach innen, wobei die Oberseite 83 des Randbereichs 82, mit Ausnahme der Erhebungen 32, eben ausgebildet ist.

In der Draufsicht (Figur 4) sind die Haltenasen 81 jeweils mit einem Radius 84 versehen. Zwischen der Unterseite 85 der Haltenasen 81 und dem Grund 75 der Vertiefung 74 ist ein Abstand ausgebildet, der größer ist als die Dicke der Membran 72, wobei die Unterseite 85 ein Abheben der Membran 72 von dem erhöhten Bereich 76 verhindert.

Die Montage der Membran 72 mit dem Trägerkörper 71 erfolgt dadurch, dass die Membran 72 gebogen wird, so dass sie unter die Haltenasen 81 geschoben werden kann. Alternativ dazu ist es auch denkbar, dass die Haltenasen 81 zuerst senkrecht nach oben abstehen, so dass die Membran 72 in die Vertiefung 74 ohne Biegen eingelegt werden kann, und dass anschließend die Haltenasen 81 durch einen Umformprozess radial nach innen umgelegt beziehungsweise umgebogen werden.

Ergänzend wird erwähnt, dass anstelle von vier Haltenasen 81 auch eine andere Anzahl von Haltenasen vorgesehen sein kann. Es ist auch denkbar, einen quer sich über die Vertiefung 74 erstreckenden Quersteg zu verwenden, der einstückig mit dem Trägerkörper 71 verbunden ist, falls damit eine Montage der Membran 72 noch möglich ist. Wesentlich für die Haltenasen 81 ist lediglich, dass diese als Niederhalterelement für die Membran 72 in deren radialen Randbereichen wirken und diese gegen die Durchlassöffnung 13 in axialer Richtung drücken, wobei jedoch ein Abheben der Membran 72 ab einem bestimmten Überdruck in der Durchlaßöffnung 13 vom erhöhten Bereich 76 möglich sein muß. Ferner kann durchaus eine radiale Beweglichkeit der Membran 72 in der Vertiefung 74 vorhanden sein, da diese die eigentliche Ventilfunktion nicht beeinträchtigt.

Zur Montage des Überdruckventils 70 an der Materialbahn 2 kann dieselbe Vorrichtung 50 verwendet werden wie für das Überdruckventil 10, da die dafür relevanten Merkmale des Überdruckventils 10 und des Überdruckventils 70 gleich ausgebildet sind. Darüber hinaus ist die Anordnung der Nadeln 62 bei dem Überdruckventil 70 unkritischer.

Bezüglich der Funktion der Überdruckventile 10 und 70 ist anzumerken, dass im Fall des Überdruckventils 10 bei einem bestimmten Überdruck in dem Verpackungsbehälter aufgrund des Gas abgebenden Füllgutes das Gas zunächst das gegebenenfalls vorhandene Filterpapier 37 passiert. Danach gelangt das Gas durch die Durchlassöffnung 13 und über einen sich ab einem bestimmten Überdruck in dem Verpackungsbehälter zwischen dem Grund 17 der Vertiefung 14 und der sich abhebenden Membran 12 bildenden Kanal in den Bereich der Ringnut 16, und anschließend in die membranfreien Zwischenzonen 25. Von dort wird das Gas über die Löcher 63 der Materialbahn 2 aus dem Verpackungsbehälter ausgeleitet.

Im Falle des Überdruckventils 70 gelangt das Gas (gegebenenfalls nach Passieren des Filterpapiers 37) über die Durchlassöffnung 13 und den angehobenen, zentralen Bereich 76 in den Grund 75 der Vertiefung 74, und von dort über den Spalt 77 und die Löcher 63 aus dem Verpackungsbehälter. Die Beeinflüssung des Öffnungsdrucks der Membran 72 erfolgt insbesondere über die Dicke und das Material der Membran 72 sowie den Abstand zwischen der Durchlassöffnung 13 und dem Rand des zentralen Bereichs 76.

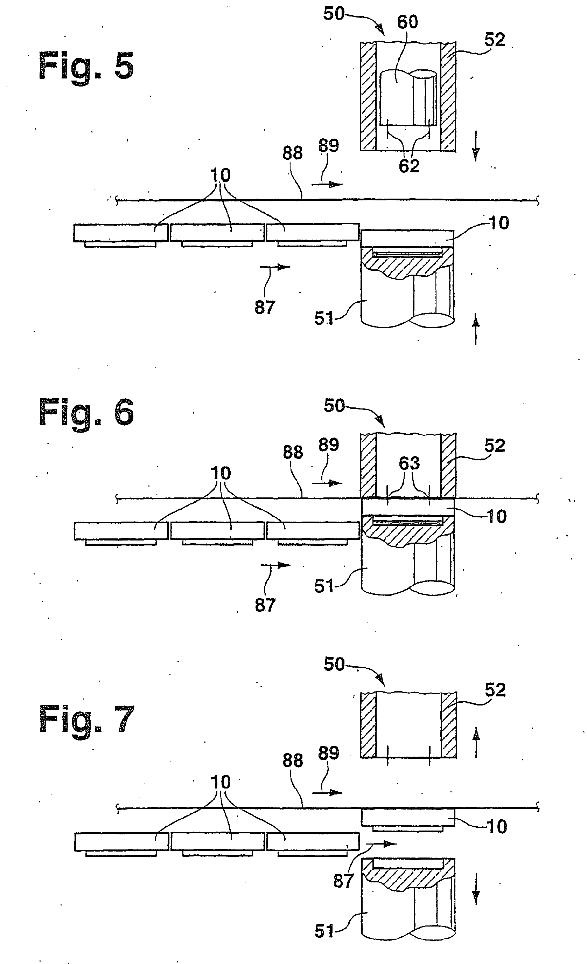

Zur Verdeutlichung der Funktionsweise der Vorrichtung 50 wird zuletzt auf die Figuren 5 bis 7 eingegangen, wobei anstelle des Überdruckventils 10 selbstverständlich auch das Überdruckventil 70 verwendet werden kann. Die Überdruckventile 10 werden dem Hubstempel 51 in Richtung des Pfeiles 87 taktweise zugeführt. Oberhalb, der Überdruckventile 10 befindet sich die Materialbahn 2 zunächst in Form einer endlosen Bahn 88, die taktweise um jeweils die für einen Verpackungsbehälter benötigte Länge in Richtung des Pfeiles 89 mittels nicht dargestellter Fördermittel bewegt wird. In einem ersten Schritt wird ein Überdruckventil 10 vom zunächst abgesenkten Hubstempel 51 aufgenommen, während sich der Siegelstempel 52 samt Nadelhalter 60 in einer über der Bahn 88 angehobenen Position befinden (Figur 5). Anschließend werden entsprechend der Figur 6 das Überdruckventil 10 durch Anheben des Hubstempels 51 gegen die Bahn 8.8, und der Siegelstempel 52 durch Absenken gegen die Bahn 88 gedrückt. Dabei wird die Seite 1 der Bahn 88 mit dem Randbereich 15 des Überdruckventils 10 verbunden, wobei im Falle einer Ultraschallverschweißung insbesondere auch die Erhebungen 32 zur Wirkung gelangen. Je nach Material der Bahn 88 sowie der Größe und Anzahl der Löcher 63 kann es dabei von Vorteil sein, die Löcher 63 mittels des Nadelhalters 60 beziehungsweise der Nadeln 62 erst in die Bahn 88 einzustechen, wenn die Bahn 88 zwischen dem Überdruckventil 10 und dem Hubstempel 51 fixiert ist., so dass ein Einziehen der Bahn 88 in die Vertiefung 14 vermieden wird..Zuletzt werden entsprechend der Figur 7 der Hubstempel 51 und der Siegelstempel 52 wieder von der Bahn 88 weg bewegt, um diese für den nächsten Vorschub freizugeben.

## Patentansprüche

1. Überdruckventil (70) für einen Verpackungsbehälter, mit einem napfförmigen, starren Trägerkörper (71), der einen umlaufenden Randbereich (82) aufweist, dessen Oberseite (83) mit einer eine Innenseite (1) des Verpackungsbehälters bildenden Materialbahn (2, 88) verbindbar ist, und an dessen Grund (75) wenigstens ein Durchlass (13) für Gas ausgebildet ist, sowie mit einer Ventilmembran (72), die unter Zwischenlage eines Dichtfluids (26) den wenigstens einen Durchlass (13) im Trägerkörper (71) bis zu einem bestimmten Überdruck im Verpackungsbehälter verschließt, und beim Überschreiten des Überdrucks einen Kanal für das ausströmende Gas bildet, das über wenigstens eine innerhalb des Randbereichs (82) in der Wand des Verpackungsbehälters ausgebildete Öffnung (63) aus dem Verpackungsbehälter austritt, wobei die Membran (72) mit dem Trägerkörper (71) unverlierbar verbunden ist, und wobei die Membran (72) randseitig mit Spiel am Grund (75) des Trägerkörpers (71) angeordnet ist, **dadurch gekennzeichnet, dass** die Verliersicherung aus wenigstens einem mit dem Randbereich (82) einstückig verbundenen Niederhalterelement (81) besteht, das auf die Venitlmembran (72) axial einwirkt.

2. Überdruckventil nach Anspruch 1, **dadurch gekennzeichnet, dass** das wenigstens eine Niederhalterelement als radial vom Randbereich (82) nach innen ragende Haltenase (81) ausgebildet ist.

3. Überdruckventil nach Anspruch 1 oder 2, **dadurch gekennzeichnet, dass** der Trägerkörper (71) als rotationssymmetrischer, flacher Körper ausgebildet ist und dass die Membran (72) eine runde Form aufweist, deren Durchmesser geringer ist als der vom Randbereich (82) begrenzte Grund (75) des Trägerkörpers (71).

4. Überdruckventil nach einem der Ansprüche 1 bis 3, **dadurch gekennzeichnet, dass** das Dichtfluid (26) innerhalb eines angehobenen Zentralbereichs (76) des Grundes (75) angeordnet ist in dem sich auch der wenigstens eine Durchlass (13) befindet.

5. Überdruckventil nach einem der Ansprüche 1 bis 4, **dadurch gekennzeichnet, dass** auf der der Innenseite des Verpackungsbehälters abgewandten Unterseite des Trägerkörpers (71) zumindest im Bereich des wenigstens Durchlasses (13) ein gasdurch- aber feststofiundurchlässiges Filterelement (37), insbesondere ein Filterpapier, angeordnet ist.

6. Überdruckventil nach einem der Ansprüche 1 bis 5, **dadurch gekennzeichnet, dass** auf der Oberseite (83) des Trägerkörpers (71) im Verbindungsbereich mit dem Verpackungsbehälter beziehungsweise der Materialbahn (2, 88) wenigstens eine umlaufende Erhebung (32) zur Ultraschweißverbindung des Trägerkörpers (71) mit der Materialbahn (2, 88) ausgebildet ist.

7. Überdruckventil nach einem der Ansprüche 1 bis 6, **dadurch gekennzeichnet, dass** die dem Verpackungsbehälter beziehungsweise der Materialbahn (2, 88) abgewandte Unterseite des Trägerkörpers (71) wenigstens einen Zentrierbereich (35) aufweist.

8. Vorrichtung (50) zum Anbringen eines Überdruckventils (10; 70) nach einem der Ansprüche 1- 7 an einer Materialbahn (2, 88), mit einem Hubstempel (51) zur Aufnahme des Überdruckventils (10; 70) sowie einen gegen die Oberseite (83) des Überdruckventils (10; 70) und eine den Verpackungsbehälter bildende Materialbahn (2, 88) verfahrbaren Siegelstempel (52), wobei innerhalb des Siegelstempels (52) ein auf- und abbeweglicher Nadelhalter (60) mit wenigstens einer Nadel (62) zum Anbringen der wenigstens einen Öffnung (63) in der Materialbahn (2, 88) angeordnet ist.

9. Vorrichtung nach Anspruch 8, **dadurch gekennzeichnet, dass** das Überdruckventil (10; 70) radial formschlüssig in einer Aufnahme (54) des Hubstempels (51) aufgenommen ist, wobei in der Aufnahme (54) zwischen einem mit dem Nadelhalter (60) fluchtenden Mittelbereich (36) des Überdruckventils (10; 70) und dem Grund (56) der Aufnahme (54) ein Spalt (57) gebildet ist.

## Claims

1. Pressure relief valve (70) for a packaging container, with a cup-shaped, rigid support body (71) which has a peripheral edge region (82), the upper side (83) of which can be connected to a web of material (2, 88) forming an inside (1) of the packaging container, and on the base (75) of which at least one passage (13) for gas is formed, and with a valve membrane (72) which, with the interposition of a sealing fluid (26), closes the at least one passage (13) in the support body (71) up to a certain positive pressure in the packaging container, and, when the positive pressure is exceeded, forms a channel for the discharging gas which exits from the packaging container via at least one opening (63) formed within the edge region (82) in the wall of packaging container, the membrane (72) being connected captively to the support body (71), and the membrane (72) being arranged on the base (75) of the support body (71) with play on the edge side, **characterized in that** the captive securing means comprises at least one holding-down element (81) which is connected integrally to the edge region (82) and acts axially on the valve membrane (72).

2. Pressure relief valve according to Claim 1, **characterized in that** the at least one holding-down element is designed as a retaining lug (81) protruding inwards radially from the edge region (82).

3. Pressure relief valve according to Claim 1 or 2, **characterized in that** the support body (71) is designed as a rotationally symmetrical, flat body and **in that** the membrane (72) has a round shape, the diameter of which is smaller than the base (75) of the support body (71), which base is bounded by the edge region (82).

4. Pressure relief valve according to one of Claims 1 to 3, **characterized in that** the sealing fluid (26) is arranged within a raised central region (76) of the base (75), in which the at least one passage (13) is also situated.

5. Pressure relief valve according to one of Claims 1 to 4, **characterized in that** a filter element (37) which is permeable to gas but is impermeable to solid matter, in particular a filter paper, is arranged at least in the region of the at least one passage (13) on the lower side of the support body (71), which lower side faces away from the inside of the packaging container.

6. Pressure relief valve according to one of Claims 1 to 5, **characterized in that** at least one peripheral elevation (32) for the ultrasonic welding connection of the support body (71) to the web of material (2, 88) is arranged on the upper side (83) of the support body (71) in the connecting region to the packaging container or the web of material (2, 88).

7. Pressure relief valve according to one of Claims 1 to 6, **characterized in that** the lower side of the support body (71), which side faces away from the packaging container or the web of material (2, 88) has at least one centring region (35).

8. Device (50) for applying a pressure relief valve (10; 70) according to one of Claims 1 - 7 to a web of material (2, 88), with a lifting ram (51) for picking up the pressure relief valve (10; 70) and a sealing ram (52) which is movable towards the upper side (83) of the pressure relief valve (10; 70) and towards a web of material (2, 88) forming the packaging container, a needle holder (60) which is movable up and down and has at least one needle (62) for making the at least one opening (63) in the web of material (2, 88) being arranged within the sealing ram (52).

9. Device according to Claim 8, **characterized in that** the pressure relief valve (10; 70) is held radially in a form-fitting manner in a receptacle (54) of the lifting ram (51), with a gap (57) being formed in the receptacle (54) between a central region (36) of the pressure relief valve (10; 70), which central region is aligned with the needle holder (60), and the base (56) of the receptacle (54).

## Revendications

1. Soupape de surpression (70) pour un contenant d'emballage, comprenant un corps support (71) rigide et en forme de bol présentant une bordure périphérique (82) dont la face supérieure (83) peut être reliée à une bande de matériau (2, 88) formant une face intérieure (1) du contenant d'emballage et dont le fond (75) comporte au moins un passage (13) pour un gaz, la soupape comprenant également une membrane (72) qui ferme au moins le passage (13) dans le corps support (71) jusqu'à obtention d'une surpression définie dans le contenant d'emballage après avoir interposé un liquide d'étanchéité (26), et qui forme, une fois cette surpression dépassée, un canal pour le gaz qui ressort du contenant d'emballage par au moins une ouverture (63) formée dans la paroi du contenant d'emballage à l'intérieur de la bordure (82), la membrane (72) étant reliée au corps support (71) de manière imperdable avec du jeu du côté de la bordure sur le fond (75) du corps support (71),
**caractérisée en ce que**
la fixation imperdable se compose d'au moins un élément de fixation (81) relié d'une seule pièce avec la bordure (82) et qui agit axialement sur la membrane (72) de la soupape.

2. Soupape de surpression selon la revendication 1,
**caractérisée en ce qu'**
au moins un élément de fixation a la forme d'un nez de support (81) dépassant radialement de la bordure (82) vers l'intérieur.

3. Soupape de surpression selon la revendication 1 ou 2,
**caractérisée en ce que**
le corps support (71) a la forme d'un corps plat, symétrique en rotation, et la membrane (72), de forme ronde, a un diamètre inférieur à celui du fond (75) du corps support (71) délimité par la bordure (82).

4. Soupape de surpression selon l'une quelconque des revendications 1 à 3,
**caractérisée en ce que**
le liquide d'étanchéité (26) est disposé à l'intérieur d'une zone centrale soulevée (76) du fond (75) où se trouve également au moins le passage (13).

5. Soupape de surpression selon l'une quelconque des revendications 1 à 4,
**caractérisée en ce que**
sur la face inférieure du corps support (71) opposée à la face intérieure du contenant d'emballage, un élément filtrant (37) perméable aux gaz et imperméable aux matières solides, notamment un papier filtre, est disposé au moins au niveau du passage (13).

6. Soupape de surpression selon l'une quelconque des revendications 1 à 5,
**caractérisée en ce que**
sur la face supérieure (83) du corps support (71), au moins un bossage périphérique (32) est formé, au niveau de la liaison avec le contenant d'emballage ou la bande de matériau (2, 88), pour relier le corps support (71) à la bande de matériau (2, 88) au moyen d'un soudage aux ultrasons.

7. Soupape de surpression selon l'une quelconque des revendications 1 à 6,
**caractérisée en ce que**
la face inférieure du corps support (71), qui est opposée au contenant d'emballage ou à la bande de matériau (2, 88), présente au moins une zone centrale (35).

8. Procédé (50) servant à appliquer une soupape de surpression (10 ; 70) selon l'une quelconque des revendications 1 à 7 sur une bande de matériau (2, 88), comprenant un poinçon linéaire (51) pour recevoir la soupape de surpression (10 ; 70) ainsi qu'un poinçon de cachet (52) mobile contre la face supérieure (83) de la soupape de surpression (10 ; 70) et contre une bande de matériau (2, 88) formant le contenant d'emballage, avec un porte-aiguille (60) mobile vers le haut et le bas à l'intérieur du poinçon de cachet (52), et portant au moins une aiguille (62) pour appliquer au moins une ouverture (63) dans la bande de matériau (2, 88).

9. Procédé selon la revendication 8,
**caractérisé en ce que**
la soupape de surpression (10 ; 70) est reçue radialement par complémentarité de formes dans un logement (54) du poinçon linéaire (51), une fente (57) étant formée dans le logement (54) entre une zone médiane (36) de la soupape de surpression alignée avec le porte-aiguille (60) et le fond (56) du logement (54).
